# EUROPEAN PATENT SPECIFICATION

(11) **EP 2 845 702 B1**
(45) Date of publication and mention of the grant of the patent: **07.11.2018**
(21) Application number: 14183856.5
(22) Date of filing: 05.09.2014
(51) Int. Cl.: B27G 21/00, B27M 1/08, F16P 3/14

(54) **Method and machine to process wood components or the like**
Verfahren und Maschine zur Verarbeitung von Holzkomponenten oder dergleichen
Procédé et machine pour traiter des composants en bois ou similaires

(30) Priority: 05.09.2013 IT BO20130474
(43) Date of publication of application: 11.03.2015
(73) Proprietor: BIESSE S.p.A., Pesaro (IT)
(72) Inventor: Andreatini, Davide, 61121 Pesaro (IT); Sorcelli, Paolo, 61100 Pesaro (IT)
(74) Representative: Manconi, Stefano

(56) References cited:
- EP-A1- 0 465 435
- EP-A1- 1 688 227
- EP-A2- 0 808 691
- DE-A1-102004 022 598
- DE-U1- 29 807 071
- GB-A- 2 399 132
- US-A- 3 889 118

## Description

The present invention relates to a machine to process wood components or the like, according to the preamble of claim 1, and to a method to process wood components, according to the preamble of claim 5. Such machine and method are known from the document DE102004022598A1.

It is known in the field of processing wood components or the like, to provide a machine comprising a base, which extends in a given first direction, and has a support surface for at least one component; and an overhead crane, which extends above the base in a second direction, which is transverse to the first direction, is limited in the first direction by two lateral faces, which are parallel and opposite to each other, and is provided with an operating head to process the components.

The overhead crane is mobile along the base in the first direction between two operating stations, each of which alternatively defines a first station for the transfer of the components onto/from the support surface and a second station to process the components by means of the operating head.

The machine is surrounded by a safety barrier along three sides of the base, and also has, at a fourth side of the base, a zone to access the support surface comprising two regions, each of which alternatively defines a first region facing the first station and a second region facing the second station.

To ensure the safety of the appointed personnel, the machine is also provided with a safety system to check for the presence of an operator in the access zone.

Currently known safety systems comprise, alternatively or combined with each other:
at least one sensitive mat placed on the ground to detect the operator entering the access zone;
at least one laser scanner or camera to detect the presence of the operator in the access zone;
a pair of safety pads (commonly indicated with the term "safety bumper") mounted on the two lateral faces of the overhead crane, to stop the overhead crane when one of the safety pads is activated by impact against the operator;
at least one photoelectric cell barrier to detect the operator entering the access zone.

When the safety system comprises both the safety pads and the photoelectric cell barrier, the safety system is configured to reduce the speed of the overhead crane in the first direction when the photoelectric cell barrier detects the presence of the operator in the access zone, and to stop the overhead crane when one of the safety pads is activated by impact against the operator him/herself.

Since the operator does not know the width of the two regions of the access zone, the known machines of the above-described type to process wood components or the like have certain drawbacks, which are mainly due to the fact that the transfer of the components onto/from the support surface forces the operator to constantly visually check the position of the overhead crane along the base so as to prevent impact with the overhead crane itself.

Accordingly, continuously visually checking the overhead crane along the base may compromise the proper carrying out of the operator's tasks inside the first region of the access zone.

It is an object of the present invention to provide a machine to process wood components or the like, which is exempt from the above-described drawbacks and is simple and cost-effective to implement.

According to the present invention, there is provided a machine to process wood components or the like, as claimed in claims from 1 to 4.

The present invention also relates to a method to process wood components or the like.

According to the present invention, a method is provided to process wood components or the like, as claimed in claim 5.

The present invention will now be described with reference to the accompanying drawings, which show a nonlimiting embodiment thereof, in which:
figure 1 is a perspective diagrammatic view of a preferred embodiment of the machine to process wood components or the like of the present invention; and
figures 2 and 3 diagrammatically show a plan view, with parts removed for clarity, of the machine in figure 1 in two different operating positions.

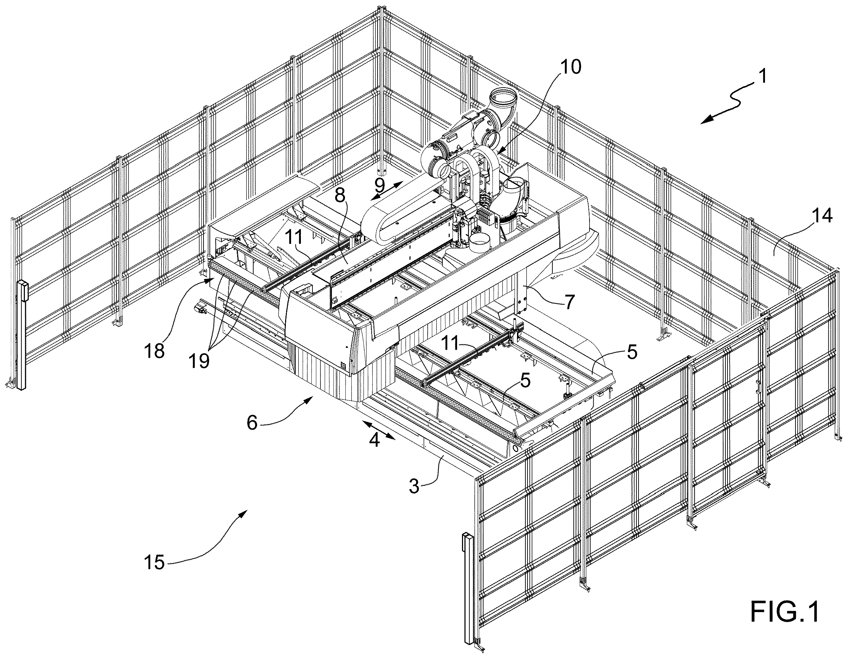

With reference to figures 1, 2 and 3, numeral 1 indicates, as a whole, a machine to process wood components or the like, which are defined, in the case in point, by substantially flat and rectangular-shaped panels 2.

Machine 1 comprises an elongated base 3, which extends in a horizontal direction 4, is substantially U-shaped, and has two lateral guide members 5, which are parallel to direction 4 itself.

Machine 1 also comprises an overhead crane 6 comprising, in turn, a vertical upright 7, which is coupled in a known manner to base 3 to perform, along base 3 itself and under the thrust of a known operating device (not shown), straight movements in direction 4.

Upright 7 carries, connected to a free end thereof, a horizontal crosspiece 8, which extends above base 3 in a direction 9, which is transverse to direction 4, and supports a known operating head 10, which is coupled in a known manner to crosspiece 8 to perform, along crosspiece 8 itself, straight movements in direction 9.

Machine 1 is also provided with a plurality of crosspieces 11, which hereinafter are indicated with the term "work surfaces", and extend between the members 5 in direction 9, and are slidingly coupled to the members 5 to be moved, manually or by means of respective known operating devices (not shown), along the members 5 themselves in direction 4.

The work surfaces 11 support a plurality of locking devices of known type (not shown), the arrangement of which on the relative work surfaces 11 substantially depends on the dimensions of the panels 2 to be processed and on the processing to be performed on the panels 2 themselves.

The locking devices (not shown) are coupled in a known manner to the relative work surfaces 11 to be moved, manually or under the thrust of a known operating device (not shown), along the relative work surfaces 11 in direction 9, and are shaped to lock the panels 2 on a substantially horizontal support surface (not shown).

The overhead crane 6 is mobile along base 3 in direction 4 inside a given space between two operating stations 12, 13, each of which alternatively defines a first station for the transfer of the panels 2 onto/from the support surface (not shown) and a second station to process the panels 2 by means of head 10.

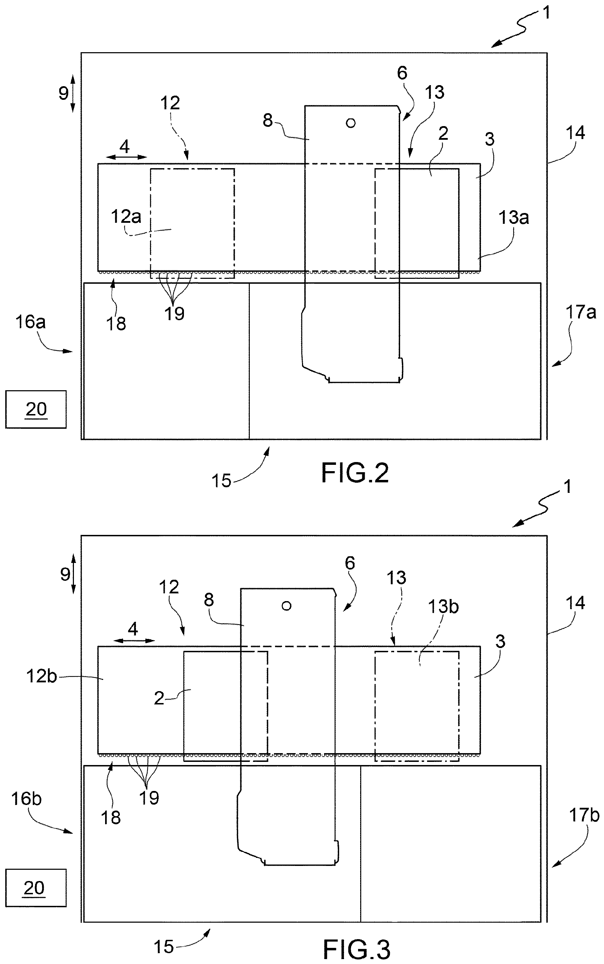

In other words, when the overhead crane 6 and head 10 are arranged in station 13 (figure 2), station 12 defines a station 12a for loading/unloading the panels 2 onto/from the support surface (not shown) and station 13 defines a station 13a for processing the panels 2, while, when the overhead crane 6 and head 10 are arranged in station 12 (figure 3), station 12 defines a station 12b for processing panels 2 and station 13 defines a station 13b for loading/unloading panels 2 onto/from the support surface (not shown).

Machine 1 is surrounded on three sides by a safety barrier 14 of known type, which is shaped to allow the appointed personnel to access the support surface (not shown) exclusively at a fourth side of machine 1 itself.

Therefore, machine 1 has an access zone 15 to the support surface (not shown) comprising two regions 16, 17, each of which alternatively defines a first region facing the relative station 12a, 13b and a second region facing the relative station 12b, 13a.

In other words, when the overhead crane 6 and head 10 are arranged in station 13a (figure 2), region 16 defines a region 16a facing station 12a and region 17 defines a region 17a facing station 13a, while, when the overhead crane 6 and head 10 are arranged in station 12b (figure 3), region 16 defines a region 16b facing station 12b and region 17 defines a region 17b facing station 13b.

The width of the regions 16a, 17b in direction 4 depends of course on the width of the regions 17a, 16b in direction 4 itself, i.e. depends on the width of the regions in which head 10 performs the processing of the panels 2.

According to the invention, the width of the two regions 16a, 17a and of the two regions 16b, 17b, respectively, is displayed to the operator by a signalling device 18 comprising, in the case in point, a plurality of light units 19, which are distributed, in the case in point, along base 3 in direction 4.

The light units 19 are connected with an electronic control unit 20, and are configured to selectively light up as a function of the width of the two regions 16a, 17a and of the two regions 16b, 17b, respectively.

According to the invention, each light unit 19 is configured to selectively generate light signals having two different colours.

In other words, certain light units 19 are lit to generate light signals having one colour (e.g. green) and to visually signal the width of the region 16a or 17b (i.e. the region of zone 15 which the operator may access), and the remaining light units 19 are lit to generate light signals having a different colour (e.g. red) and to visually signal the width of region 16b or 17a (i.e. the region of zone 15 which the operator may not access).

Furthermore, it follows from the above explanation that the operator has an immediate visual perception of region 16a or 17b (i.e. the region of zone 15 which the operator may access) and of region 17a or 16b (i.e. the region of zone 15 which the operator may not access), and may perform the operations for loading/unloading panels 2 onto/from the support surface (not shown) in complete safety.

It is also worth noting that the signalling device 18 may be configured so that the widths of the regions 16a and 17a or 16b and 17b signalled by the light units 19 are always constant during an operating cycle of the operating head 10 in station 12b or 13a, or so that they are constant during a part of an operating cycle of the operating head 10 in station 12b or 13a and that they vary, within an operating cycle of the operating head 10 in station 12b or 13a, as a function of the position of the overhead crane 6 along base 3 in direction 4.

According to certain variants not shown:
the light units 19 are distributed along the ground in direction 4 at zone 15; and
the light units 19 are configured to generate light signals having a single colour and to selectively light up to signal each time the width of only one of the two regions 16a, 17a or 16b, 17b.

According to further variants not shown, light units 19 are eliminated and replaced with:
a signalling slider, which is coupled in a known manner to base 3 so as to perform straight movements along base 3 in direction 4 and to visually signal to the operator, at zone 15, the width of the regions 16a and 17a or 16b and 17b; or
a projector configured to project an image suited to visually signal to the operator, at zone 15, the width of at least one of the regions 16a and 17a or 16b and 17b; or
a plurality of mechanical signalling members, which are distributed along base 3 in direction 4, and are selectively mobile, as a function of the width of at least one of the regions 16a and 17a or 16b and 17b, between a rest position, in which the mechanical signalling members are substantially contained inside base 3, and an operating position, in which the mechanical signalling members protrude from base 3.

## Claims

1. A machine to process wood components (2) or the like comprising a base (3), which extends in a first direction (4), and has a support surface for at least one component (2); an overhead crane (6), which extends above the base (3) in a second direction (9) that is transverse to the first direction (4), is provided with an operating head (10) to process the components (2), and is mobile along the base (3) in the first direction (4) between two operating stations (12, 13), each of which alternatively defines a first station (12a, 13b) for the transfer of the components (2) onto/from the support surface and a second station (12b, 13a) to process the components (2) by means of the operating head (10); and an access zone (15), which allows an operator to access to the support surface, the access zone (15) comprising two regions (16, 17), each of which alternatively defines a first region (16a, 17b) facing the first station (12a, 13b) and a second region (16b, 17a) facing the second station (12b, 13a); and **characterised in that** it comprises, furthermore, a visual signalling device (18) to visually signal to the operator a width of at least one of said first and second regions (16a, 17b, 16b, 17a) in the first direction (4); the visual signalling device (18) comprising a plurality of light units (19), which are distributed, in correspondence to the access zone (15), along the base (3) or along the ground in the first direction (4), and are configured to selectively light up and visually signal to the operator the width of at least one of said first and second regions (16a, 17b, 16b, 17a); and each light unit (19) being configured to selectively generate light signals having two different colours.

2. A machine according to claim 1, wherein the visual signalling device (18) is configured in such a way that the signalled width is always constant during an operating cycle of the operating head (10) in the second station (12b, 13a).

3. A machine according to claim 1, wherein the visual signalling device (18) is configured in such a way that the signalled width is constant during at least part of an operating cycle of the operating head (10) in the second station (12b, 13a).

4. A machine according to claim 1, wherein the visual signalling device (18) is configured in such a way that the signalled width varies during an operating cycle of the operating head (10) in the second station (12b, 13a) as a function of the position of the overhead crane (6) along the base (3).

5. A method to process wood components (2) or the like in a machine according to claim 1 and comprising a base (3), which extends in a first direction (4), and defines a support surface for at least one component (2); an overhead crane (6), which extends above the base (3) in a second direction (9) that is transverse to the first direction (4), and is provided with an operating head (10) to process the components (2); and an access zone (15) to allow an operator to access to the support surface; the method comprising the step of:
moving the overhead crane (6) along the base (3) in the first direction (4) between two operating stations (12, 13), each of which alternatively defines a first station (12a, 13b) for the transfer of the components (2) onto/from the support surface and a second station (12b, 13a) to process the components (2) by means of the operating head (10) ;
the access zone (15) comprising two regions (16, 17), each of which alternatively defines a first region (16a, 17b) facing the first station (12a, 13b) and a second region (16b, 17a) facing the second station (12b, 13a);
and being **characterised in that** it comprises, furthermore, the step of:
visually signalling to the operator a width of at least one of said first and second regions (16a, 17b, 16b, 17a) in the first direction (4).

## Patentansprüche

1. Maschine zum Bearbeiten von Holzkomponenten (2) oder dergleichen mit einer Basis (3), die sich in einer ersten Richtung (4) erstreckt und eine Tragfläche für wenigstens eine Komponente (2) aufweist, einen Überkopfkran (6), der sich oberhalb der Basis (3) in einer zweiten Richtung (9) erstreckt, quer zur ersten Richtung (4), versehen mit einem Bearbeitungskopf (10) zum Bearbeiten der Komponenten (2), und der in der ersten Richtung (4) entlang der Basis (3) beweglich ist zwischen zwei Bearbeitungsstationen (12,13), deren jede alternativ eine erste Station (12a,13b) zum Transfer der Komponenten (2) auf die/von der Tragfläche aufweist, sowie eine zweite Station (12b,13a) zum Bearbeiten der Komponenten (2) mittels des Bearbeitungskopfes (10); eine Zugangszone (15), die dem Arbeiter Zugang zur Tragfläche erlaubt und die zwei Bereiche (16,17) aufweist, deren jede alternativ einen ersten Bereich (16a,17b) aufweist, die der ersten Station (12a,13b) zugewandt ist, sowie einen zweiten Bereich (16b,17a), der der zweiten Station (12b,13a) zugewandt sind; **dadurch gekennzeichnet, dass**
sie weiterhin eine visuelle Signaleinrichtung (18) aufweist, um dem Arbeiter visuell die Breite der wenigstens einen der ersten und zweiten Bereiche (16a,17b,16b,17a) in der ersten Richtung (4) aufweist; die Signaleinrichtung (18) umfasst eine Mehrzahl von Lichteinheiten (19), die entsprechend der Zugangszone (15) entlang der Basis (3) oder entlang des Bodens in der ersten Richtung (4) verteilt sind und die derart konfiguriert sind, dass sie selektiv aufleuchten und dem Arbeiter visuell ein Signal bezüglich der Breite der wenigstens einen der ersten und zweiten Bereiche (16a,17b,16,b17a) übermitteln, wobei jede Lichteinheit (19) derart konfiguriert ist, dass sie selektiv Lichtsignale von zwei verschiedenen Farben erzeugen.

2. Maschine nach Anspruch 1, wobei die visuelle Signaleinrichtung (18) derart konfiguriert ist, dass die signalisierte Breite während eines Bearbeitungszyklus des Bearbeitungskopfes (10) in der zweiten Station (12b,13a) stets konstant ist.

3. Maschine nach Anspruch 1, wobei die visuelle Signaleinrichtung (18) derart konfiguriert ist, dass die signalisierte Breite während wenigstens eines Teiles eines Bearbeitungszyklus des Bearbeitungskopfes (10) in der zweiten Station (12b,13a) konstant ist.

4. Maschine nach Anspruch 1, wobei die visuelle Signaleinrichtung (18) auf solche Weise konfiguriert ist, dass die signalisierte Breite während eines Bearbeitungszyklus des Bearbeitungskopfes (10) in der zweiten Station (12b,13a) als Funktion der Position des Überkopfkranes (6) entlang der Basis (3) variiert.

5. Verfahren zum Bearbeiten von Holzkomponenten (2) oder dergleichen in einer Maschine gemäß Anspruch 1, umfassend eine Basis (3), die sich in einer ersten Richtung (4) erstreckt und eine Tragfläche für wenigstens eine Komponente (2) aufweist, einen Überkopfkran (6), der sich oberhalb der Basis (3) in einer zweiten Richtung (9) erstreckt, quer zur ersten Richtung (4), versehen mit einem Bearbeitungskopf (10) zum Bearbeiten der Komponenten (2), und mit einer Zugangszone (15), die dem Arbeiter den Zugang zur Tragfläche erlaubt, umfassend die folgenden Verfahrensschritte:
Bewegen des Überkopfkranes (6) entlang der Basis (39 in der ersten Richtung (4) zwischen zwei Bearbeitungsstationen (12,13), deren jede alternativ eine erste Station (12a,13b) für den Transfer der Komponenten (2) auf die/von der Tragfläche erlaubt, sowie eine zweite Station (12b,13a) zum Bearbeiten der Komponenten (2) mittels des Bearbeitungskopfes (10); die Zugangszone (15) umfasst zwei Bereiche (16,17), deren jede alternativ einen ersten Bereich (16a,17b) umfasst, der ersten Station (12a,13b) zugewandt, sowie einen zweiten Bereich (16b,17a), der zweiten Station (12b,13a) zugewandt; **gekennzeichnet durch** die folgenden Verfahrensschritte:
visuelles Signalisieren dem Arbeiter einer Breite wenigstens eines der ersten und zweiten Bereiche (16a,17b,16b,17a) in der ersten Richtung (4).

## Revendications

1. Machine pour traiter des composants en bois (2) ou similaires comprenant une base (3), qui s'étend dans un premier sens (4), et possède au moins une surface de support pour au moins un composant (2) ; un pont roulant (6), qui s'étend au-dessus de la base (3) dans un second sens (9) qui est transversal au premier sens (4), est doté d'une tête opérationnelle (10) pour traiter les composants (2), et est mobile le long de la base (3) dans le premier sens (4) entre deux stations opérationnelles (12, 13), chacune desquelles définit alternativement une première station (12a, 13b) pour le transfert des composants (2) sur / depuis la surface de support et une deuxième station (12b, 13a) pour traiter les composants (2) au moyen de la tête opérationnelle (10) ; et une zone d'accès (15) qui permet à un opérateur d'accéder à la surface de support, la zone d'accès (15) comprenant deux parties (16, 17), chacune desquelles définit alternativement une première partie (16a, 17b) faisant face à la première station (12a, 13b) et une deuxième partie (16b, 17a) faisant face à la deuxième station (12b, 13a) ; et **caractérisée en ce qu'**elle comprend, en outre, un dispositif de signalisation visuel (18) pour signaler visuellement à l'opérateur une largeur d'au moins une desdites première et deuxième parties (16a, 17b, 16b, 17a) dans le premier sens (4) ; le dispositif de signalisation visuel (18) comprenant une pluralité d'unités d'éclairage (19) qui sont réparties, en correspondance à la zone d'accès (15), le long de la base (3) ou le long du fond dans le premier sens (4), et sont configurées pour éclairer de manière sélective et signaler visuellement à l'opérateur la largeur d'au moins une desdites première et deuxième parties (16a, 17b, 16b, 17a) ; et chaque unité d'éclairage (19) étant configurée pour générer de manière sélective des signaux lumineux ayant deux couleurs différentes.

2. Machine selon la revendication 1, dans laquelle le dispositif de signalisation visuel (18) est configuré d'une manière telle que la largeur signalée est toujours constante pendant un cycle opérationnel de la tête opérationnelle (10) dans la deuxième station (12b, 13a).

3. Machine selon la revendication 1, dans laquelle le dispositif de signalisation visuel (18) est configuré d'une manière telle que la largeur signalée est constante pendant au moins une partie d'un cycle opérationnel de la tête opérationnelle (10) dans la deuxième station (12b, 13a).

4. Machine selon la revendication 1, dans laquelle le dispositif de signalisation visuel (18) est configuré d'une manière telle que la largeur signalée varie pendant un cycle opérationnel de la tête opérationnelle (10) dans la deuxième station (12b, 13a) en fonction de la position du pont roulant (6) le long de la base (3).

5. Procédé pour traiter des composants en bois (2) ou similaires dans une machine selon la revendication 1 et comprenant une base (3), qui s'étend dans un premier sens (4), et définit une surface de support pour au moins un composant (2) ; un pont roulant (6), qui s'étend au-dessus de la base (3) dans un deuxième sens (9) qui est transversal au premier sens (4), et est doté d'une tête opérationnelle (10) pour traiter les composants (2) ; et une zone d'accès (15) pour permettre à un opérateur d'accéder à la surface de support ; le procédé comprenant les étapes de :
déplacement du pont roulant (6) le long de la base (3) dans le premier sens (4) entre deux stations opérationnelles (12, 13), chacune desquelles définit alternativement une première station (12a, 13b) pour le transfert des composants (2) sur / depuis la surface de support et une deuxième station (12b, 13a) pour traiter les composants (2) au moyen de la tête opérationnelle (10) ;
la zone d'accès (15) comprenant deux parties (16, 17), chacune desquelles définit alternativement une première partie (16a, 17b) faisant face à la première station (12a, 13b) et une deuxième partie (16b, 17a) faisant face à la deuxième station (12b, 13a) ;
et étant **caractérisé en ce qu'**il comprend, en outre, l'étape de :
signalisation visuelle à l'opérateur d'une largeur d'au moins une desdites première et deuxième parties (16a, 17b, 16b, 17a) dans le premier sens (4).
